# EUROPÄISCHE PATENTANMELDUNG

(11) **EP 1 882 833 A1**
(43) Veröffentlichungstag der Anmeldung: **30.01.2008**
(21) Anmeldenummer: 07112779.9
(22) Anmeldetag: 19.07.2007
(51) Int. Cl.: F01N 3/20

(54) **Dosiervorrichtung**

(30) Priorität: 25.07.2006 DE 102006034204
(71) Anmelder: Pierburg GmbH, 41460 Neuss (DE)
(72) Erfinder: Bürger, Frank, 52355, Düren (DE); Ludwig, Norbert, 41379, Brüggen (DE); Stephan, Waldemar, 44319, Dortmund (DE); Peiffer, Christoph, 41515, Grevenbroich (DE)
(74) Vertreter: von Kirschbaum, Alexander

(57) **Zusammenfassung**

Die Erfindung betrifft eine Dosiervorrichtung zum Dosieren von trockenem Harnstoff (24) in einem Kraftfahrzeug, der insbesondere zur Durchführung des SCR-Verfahrens verwendet wird, wobei in einem Portionierelement (14) ein erster (18) und ein zweiter Aufnahmeraum (20) ausgebildet sind, die mit einer ersten (10) sowie mit einer zweiten Zuführvorrichtung (12) und mit einem Abführkanal (22) verbindbar sind. Es erfolgt ein Verschieben des Portionierelementes (14) von einer ersten in eine zweite Stellung durch ein Antriebselement (16).

## Beschreibung

Die Erfindung betrifft eine Dosiervorrichtung zum Dosieren von trockenem Harnstoff in einem Kraftfahrzeug, der insbesondere zur Durchführung des SCR-Verfahrens verwendet wird.

Bei der Verbrennung von Benzin und Dieselkraftstoffen in Automobilen werden Stickoxide ausgestoßen, die zu einer Luftverschmutzung oder zu einer erhöhten Ozonkonzentration in Ballungsgebieten führen können. Weiterhin wurden die gesetzlichen Schadstoffgrenzwerte für Kraftfahrzeuge verschärft, so dass Bemühungen unternommen werden, die beim Betrieb eines Kraftfahrzeugs entstehenden Stickoxidemissionen zu verringern.

In diesem Zusammenhang bekannt ist das SCR-Verfahren (selective catalytic reduction), ein Abgasreinigungsverfahren zur Reduktion von Stickoxiden, die in Verbrennungsanlagen entstehen. Dabei wird den Abgasen ein Reduktionsmittel (Katalysator) zugeführt, das Ammoniak oder Harnstoff aufweist. Der Katalysator reagiert mit den Stickoxiden in den Abgasen unter Bildung von Stickstoff, Kohlendioxid und Wasser. Aufgrund der toxischen Eigenschaften von Ammoniak wird zur Durchführung des SCR-Verfahrens in Kraftfahrzeugen in den meisten Fällen Harnstoff verwendet. Dieser kann in trockener Form vorliegen, wobei es vorteilhaft ist, den trockenen Harnstoff in bereits portionierter Form, beispielsweise in Form von Pellets, zu bevorraten.

Zur Durchführung des SCR-Verfahrens ist es notwendig, in wiederholten Abständen eine definierte Portioniermenge des trockenen Harnstoffs zu vereinzeln und die Portioniermenge einer Vorrichtung zur weiteren Verarbeitung zukommen zu lassen.

Aus DE 102 51 498 A1 ist eine Vorrichtung zum Dosieren von trockenem Harnstoff bekannt, bei der durch ein bewegliches Portionierelement jeweils ein Pellet des trockenen Harnstoffs vereinzelt und durch einen Druckluftkanal der weiteren Verarbeitung zugeführt wird. Das Portionierelement kann als Rotationselement oder alternativ als ein schlittenförmiges Element ausgebildet sein.

Die Verwendung eines rotierenden Portionierelements bedingt u.a. durch das Vorsehen eines Elektromotors einen komplexen und aufwändigen Aufbau. Die Verwendung eines schlittenförmigen Portionierelements kann eine ausreichend schnelle Förderung der Pellets nicht gewährleisten, da das schlittenförmige Portionierelement nach seiner Entleerung wieder in einen Aufnahmezustand (Befüllstellung) gebracht werden muss, um ein neues Pellet aufzunehmen, so dass nur in jedem zweiten Bewegungsschritt ein Pellet abgegeben werden kann.

Aufgabe der Erfindung ist es, eine Dosiervorrichtung zum Dosieren von trockenem Harnstoff in einem Kraftfahrzeug zu schaffen, die eine einfache und schnelle Dosierung ermöglicht.

Die Lösung der Aufgabe erfolgt durch die Merkmale des Anspruchs 1.

Die Dosiervorrichtung weist ein verschiebbares Portionierelement mit einem ersten und einem zweiten Aufnahmeraum auf, die mit einer ersten und einer zweiten Zuführvorrichtung sowie mit einem Abführkanal durch Verschieben verbindbar sind. Dabei ist das Portionierelement von einem Antriebselement, beispielsweise einem Elektromagneten, von einer ersten Stellung in eine zweite Stellung verschiebbar.

Durch das Vorsehen eines ersten und zweiten Aufnahmeraums sowie einer ersten und zweiten Zuführvorrichtung ist sichergestellt, dass bei jedem Bewegungsschritt der Dosiervorrichtung eine Portioniermenge des trockenen Harnstoffs gefördert wird, so dass eine ausreichend schnelle Dosierung gewährleistet ist. Gegenüber einem rotierenden Portionierelement weist die erfindungsgemäße Dosiervorrichtung einen vereinfachten Aufbau auf, da sie lediglich zwischen zwei Stellungen bewegt werden muss. Die Dosiervorrichtung kann daher einfach und kostengünstig mit einem Elektromagneten betrieben werden, so dass beispielsweise der Einsatz eines Elektromotors entfällt.

In einer bevorzugten Ausführungsform ist in der ersten Stellung der erste Aufnahmeraum mit der ersten Zuführvorrichtung und der zweite Aufnahmeraum mit dem Abführkanal verbunden, während in der zweiten Stellung der erste Aufnahmekanal mit dem Abführkanal und der zweite Aufnahmeraum mit der zweiten Zuführvorrichtung verbunden ist. Dabei kann in der ersten Stellung der erste Aufnahmeraum die Portioniermenge des trockenen Harnstoffs von der ersten Zuführvorrichtung aufnehmen und der zweite Aufnahmeraum die Portioniermenge des trockenen Harnstoffs an den Abführkanal abgeben. In der zweiten Stellung kann der erste Aufnahmeraum die Portioniermenge des trockenen Harnstoffs an den Abführkanal abgeben und der zweite Aufnahmeraum eine Portioniermenge des trockenen Harnstoffs vom zweiten Zuführkanal aufnehmen.

Dadurch ist sichergestellt, dass eine Portioniermenge des trockenen Harnstoffs bei jedem Bewegungsschritt zum weiteren Transport bereit gestellt wird.

Zum Abführen des dosierten trockenen Harnstoffs ist es besonders bevorzugt, den Abführkanal mit Druckluft zu beaufschlagen. Das Abführen des Harnstoffs kann auch durch das Vorsehen einer Saugvorrichtung an der in Transportrichtung unteren Seite des Abführkanals stattfinden.

Die Portioniermenge des trockenen Harnstoffs kann entweder genau ein oder auch mehrere Elemente des trockenen Harnstoffs umfassen.

Weiterhin können die erste und zweite Zuführvorrichtung derart trichterförmig ausgebildet sein, dass sie in ihrem in Transportrichtung unteren Teil höchstens die Portioniermenge des trockenen Harnstoffs nebeneinander aufnehmen können.

Besonders bevorzugt liegt der zu dosierende Harnstoff in kugelähnlicher Form vor, so dass er besonders einfach und kostengünstig industriell gefertigt werden kann. Derartiger Harnstoff wird üblicherweise durch den Fachbegriff "Pellet" bezeichnet. Je nach Größe der verwendeten Pellets lässt sich eine Abstufung der gewünschten Dosierung des trockenen Harnstoffs erreichen. Dabei können Abweichungen von der Sollgröße der Pellets durch eine Siebung vor der Dosierung vermieden werden, so dass sich die Portioniermenge des dosierten Harnstoffs stets innerhalb eines definierten Toleranzbereichs befindet. Dieser kann beispielsweise bei ± 5 % der Sollgröße liegen.

Im Folgenden werden bevorzugte Ausführungsformen der Erfindung anhand der anliegenden Zeichnungen beschrieben.

Es zeigen:
- Fig. 1: eine schematische Seitenansicht der Dosiervorrichtung in einer ersten Stellung und
- Fig. 2: eine schematische Seitenansicht der Dosiervorrichtung in einer zweiter Stellung.

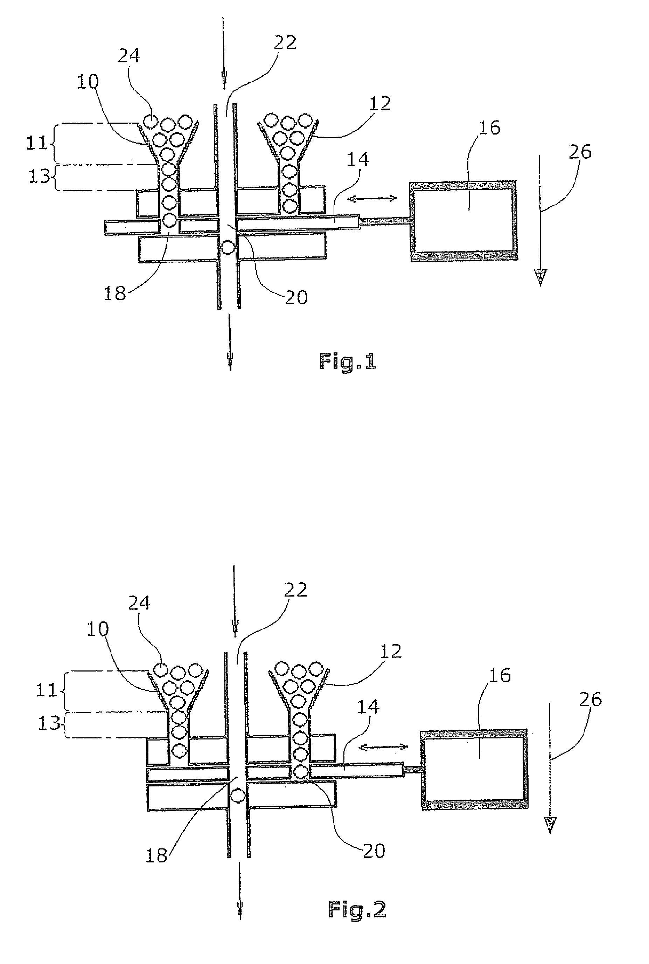

Die Dosiervorrichtung umfasst ein Portionierelement in Form eines Schiebers 14, das durch ein Antriebselement in Form eines Elektromagneten 16 von einer ersten Stellung (Fig. 1) in eine zweite Stellung (Fig. 2) verschiebbar ist. Dabei weist der Schieber einen ersten 18 sowie einen zweiten Aufnahmeraum 20 auf. Weiterhin umfasst die Dosiervorrichtung eine erste 10 sowie eine zweite Zuführvorrichtung 12. Diese sind in ihrem oberen Abschnitt 11 derart trichterförmig ausgebildet, dass in ihrem unteren Abschnitt 13 genau ein Pellet 24 nebeneinander in Transportrichtung 26 angeordnet sein kann.

In der ersten Stellung (Fig. 1) ist der erste Aufnahmeraum 18 des Schiebers 14 mit der ersten Zuführvorrichtung 10 verbunden, so dass er genau ein Pellet 24 aufnehmen kann. Gleichzeitig ist der zweite Aufnahmeraum 20 des Schiebers 14 mit dem Abführkanal 22 verbunden. Dieser ist mit Druckluft beaufschlagt, so dass das im zweiten Aufnahmeraum 20 befindliche Pellet 24 in Transportrichtung 26 zur weiteren Bearbeitung transportiert wird. Diese kann beispielsweise durch einen nicht dargestellten Thermolyse-Reaktor erfolgen, der aus dem trockenen Harnstoff durch Wärmezufuhr das für das SCR-Verfahren erforderliche Ammoniak gewinnt.

In der zweiten Stellung (Fig. 2) ist der erste Aufnahmeraum 18 des Schiebers 14 mit dem Abführkanal 22 verbunden, so dass das in dem ersten Aufnahmeraum 18 befindliche Pellet 24 durch die Druckluft der weiteren Verarbeitung zugeführt wird, während der zweite Aufnahmeraum 20 derart mit der zweiten Zuführvorrichtung 12 verbunden ist, dass er ein weiteres Pellet 24 aufnehmen kann. Dieses wird dann wieder in der ersten Stellung (Fig. 1) an den Abführkanal 22 abgegeben.

Anstatt durch trichterförmige Zuführvorrichtungen 10,12 kann der trockene Harnstoff ggf. durch einen (nicht gezeigten) in Transportrichtung vor dem Portionierelement 14 befindlichen Behälter bereitgestellt werden.

Weiterhin ist es möglich, den ersten 18 und den zweiten Aufnahmeraum 20 derart auszubilden, dass er mehrere Pellets 24 übereinander und/oder nebeneinander aufnehmen kann, sofern eine solche Anzahl an Pellets als Portioniermenge sinnvoll ist. Das Abführen der Pellets 24 durch den Abführkanal 22 kann anstatt durch Druckluft auch allein durch die Schwerkraft erfolgen.

Weiterhin ist es möglich, eine Ausführungsform des Schiebers 14 mit mehr als zwei Aufnahmeräumen vorzusehen, die dann von einer Befüll- in eine Entleerstellung verschoben werden.

## Patentansprüche

1. Dosiervorrichtung zum Dosieren von trockenem Harnstoff (24) in einem Kraftfahrzeug, insbesondere für einen SCR-Katalysator, mit
einem Portionierelement (14) zum Portionieren des trockenen Harnstoffs (24), wobei das Portionierelement (14) von einer ersten Stellung in eine zweite Stellung verschiebbar ist,
einem Antriebselement (16) zum Betätigen des Portionierelements (14),
einem Abführkanal (22) zum Abführen des trockenen Harnstoffs (24) nach erfolgter Dosierung,
einer ersten (10) und einer zweiten Zuführvorrichtung (12) zum Zuführen des zu dosierenden Harnstoffs (24) und
einem ersten (18) und zweiten Aufnahmeraum (20), die im Portionierelement (14) ausgebildet sind,
wobei der erste (18) und zweite Aufnahmeraum (20) mit der ersten (10) und zweiten Zuführvorrichtung (12) sowie mit dem Abführkanal (22) durch Verschieben verbindbar sind.

2. Dosiervorrichtung nach Anspruch 1, **dadurch gekennzeichnet, dass** in der ersten Stellung der erste Aufnahmeraum (18) zum Befüllen mit der ersten Zuführvorrichtung (10) und der zweite Aufnahmeraum (20) mit dem Abführkanal (22) verbunden ist, und
in der zweiten Stellung der erste Aufnahmeraum (18) mit dem Abführkanal (22) und der zweite Aufnahmeraum (20) zum Befüllen mit der zweiten Zuführvorrichtung (12) verbunden ist.

3. Dosiervorrichtung nach Anspruch 1 oder 2, **dadurch gekennzeichnet, dass** in der ersten Stellung der erste Aufnahmeraum (18) die Portioniermenge des trockenen Harnstoffs (24) von der ersten Zuführvorrichtung (10) aufnimmt und der zweite Aufnahmeraum (20) die Portioniermenge des trockenen Harnstoffs (24) an den Abführkanal (22) abgibt, und
in der zweiten Stellung der erste Aufnahmeraum (18) die Portioniermenge des trockenen Harnstoffs (24) an den Abführkanal (22) abgibt und der zweite Aufnahmeraum (20) die Portioniermenge des trockenen Harnstoffs (24) von der zweiten Zuführvorrichtung (12) aufnimmt.

4. Dosiervorrichtung nach einem der Ansprüche 1-3, **dadurch gekennzeichnet, dass** der Abführkanal (22) zum Abführen des dosierten trockenen Harnstoffs (24) mit Druckluft beaufschlagbar ist.

5. Dosiervorrichtung nach einem der Ansprüche 1-4, **dadurch gekennzeichnet, dass** der erste (18) und zweite Aufnahmeraum (20) eine Eingangs- und eine Ausgangsöffnung aufweisen.

6. Dosiervorrichtung nach einem der Ansprüche 1-5, **dadurch gekennzeichnet, dass** der trockene Harnstoff (24) insbesondere kugelförmige Pellets aufweist.

7. Dosiervorrichtung nach einem der Ansprüche 1-6, **dadurch gekennzeichnet, dass** die Portioniermenge genau ein Element des trockenen Harnstoffs (24) aufweist.

8. Dosiervorrichtung nach einem der Ansprüche 1-7, **dadurch gekennzeichnet, dass** die erste (10) und zweite Zuführvorrichtung (12) insbesondere in einem in Transportrichtung (26) oberen Abschnitt (11) trichterförmig ausgebildet sind.

9. Dosiervorrichtung nach einem der Ansprüche 1-8, **dadurch gekennzeichnet, dass** die erste (10) und zweite Zuführvorrichtung (12) insbesondere in einem in Transportrichtung (26) unteren Abschnitt (13) derart ausgebildet sind, dass sie höchstens die Portioniermenge des trockenen Harnstoffs (24) in Transportrichtung (26) nebeneinander aufnehmen können.

10. Dosiervorrichtung nach einem der Ansprüche 1-9, **dadurch gekennzeichnet, dass** der Abführkanal (22) in der ersten und zweiten Stellung offen ist.
